# FASCICULE DE BREVET EUROPEEN

(11) **EP 2 879 863 B1**
(45) Date de publication et mention de la délivrance du brevet: **14.09.2016**
(21) Numéro de dépôt: 13737195.1
(22) Date de dépôt: 08.07.2013
(51) Int. Cl.: B29D 30/06

(54) **ELEMENT DE MOULE POUR LA VULCANISATION D'UNE BANDE DE ROULEMENT D'UN PNEUMATIQUE**
FORMELEMENT ZUR VULKANISIERUNG EINER REIFENLAUFFLÄCHE
MOULD ELEMENT FOR VULCANISING A TYRE TREAD

(30) Priorité: 31.07.2012 FR 1257398
(43) Date de publication de la demande: 10.06.2015
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: COCURAL, Jean-Louis, 63040 Clermont-Ferrand Cedex 9 (FR); GOMET, Christian, 63040 Clermont-Ferrand Cedex 9 (FR)
(74) Mandataire: Demaure, Pierre-Yves
(86) Numéro de dépôt international: PCT/EP2013/064381
(87) Numéro de publication internationale: WO 2014/019811

(56) Documents cités:
- EP-B1- 1 987 932
- GB-A- 1 075 312
- US-A- 3 327 570

## Description

### DOMAINE DE L'INVENTION

La présente invention concerne le domaine de la fabrication d'un moule pour la vulcanisation d'une bande de roulement d'un pneumatique destinée à recevoir des clous pour des roulages sur glace. Plus particulièrement, l'invention concerne un élément de moule comportant un insert, ainsi qu'un procédé de réalisation d'un tel élément de moule.

### ETAT DE LA TECHNIQUE

Il est connu du document EP1987932 un procédé de réalisation d'un moule pour pneumatique clouté. Ce moule comprend une surface de moulage apte à mouler une surface de roulement de la bande de roulement du pneumatique. Le procédé de réalisation du moule comprend une étape de mise en place d'un insert dans un logement du moule. Cet insert comporte un corps d'insert et une tige fixée dans ce corps, cette tige étant destinée à mouler dans la bande de roulement une cavité apte à recevoir un clou.

Dans le document EP1987932, un marquage est venu de matière avec une surface du corps de l'insert. Ce marquage permet de mouler un motif sur la surface de roulement de la bande de roulement à proximité du clou. Ce motif a pour but la satisfaction de besoins spécifiques liés à des considérations esthétiques, fonctionnelles, ou à la présentation d'une information, comme par exemple l'indication des références du clou à utiliser pour le pneumatique.

Dans le document EP1987932, le corps d'insert est vissé dans un logement présent dans le moule et la tige est fixée à ce corps d'insert également par vissage. Or, pour la fabrication de différentes gammes de pneumatiques, il est possible d'avoir recours à différents types de clou présentant différentes dimensions tout en voulant conserver le même moule. Ainsi, à chaque changement de type de clou, il est nécessaire de changer la tige de l'insert pour adapter la cavité moulée dans le pneu, par cette tige, aux dimensions du clou désirées. Outre la tige de l'insert, il peut être également nécessaire de remplacer les moyens de marquage moulant les références du clou à utiliser pour la gamme du pneumatique en question. Comme les moyens de marquage sont solidaires de l'insert, un changement de ces moyens de marquage entraîne nécessairement un démontage de l'insert en entier. Or les opérations successives de montage et de démontage de l'insert dans un logement du moule peuvent endommager à terme ce logement, rendant plus difficile voire impossible la mise en place d'un nouvel insert dans le logement. Dans un tel cas, il est alors nécessaire de changer la partie du moule comprenant ce logement endommagé, ce qui peut représenter à terme un coût non négligeable.

Il existe donc un besoin pour faciliter la préparation d'un moule apte à mouler un pneumatique destiné à recevoir des clous, tout en limitant les risques d'endommagement de ce moule lors de cette étape de préparation.

### DEFINITIONS

Par « pneumatique », on entend tous les types de bandages élastiques soumis à une pression interne ou non.

Par « bande de roulement » d'un pneumatique, on entend une quantité de matériau caoutchoutique délimitée par des surfaces latérales et par deux surfaces principales dont l'une est destinée à entrer en contact avec une chaussée lorsque le pneumatique roule.

Par « surface de roulement » d'une bande de roulement, on entend ici l'ensemble des points de la bande de roulement qui entrent en contact avec un sol lorsque le pneumatique, gonflé à sa pression de référence et sans clous, roule sur ce sol. La pression de gonflage de référence est définie dans les conditions d'utilisation du pneumatique, conditions précisées notamment par la norme E.T.R.T.O.

Par « découpure » dans une bande de roulement, on entend l'espace délimité par des parois de matière se faisant face et distantes l'une de l'autre d'une distance non nulle.

Par « incision », on entend une découpure dont la distance entre les parois de matière est appropriée pour permettre la mise en contact au moins partielle des parois opposées délimitant ladite incision lors du passage dans le contact avec le sol.

Par « rainure », on entend une découpure dont la distance entre les parois de matière est telle que ces parois ne peuvent venir en contact l'une contre l'autre dans des conditions usuelles de roulage.

Par « moule », on entend un ensemble d'éléments de moule séparés qui, par rapprochement relatif, permettent de délimiter un espace de moulage toroïdal.

Par « surface de moulage » d'un moule, on entend la surface interne du moule délimitant l'espace de moulage toroïdal.

Par « lamelle », on entend un élément ayant la forme d'une cloison mince et rigide, généralement métallique, dont la hauteur correspond à la profondeur de l'incision que l'on veut mouler dans la bande de roulement, et dont la longueur correspond à la longueur de cette incision. La lamelle peut avoir une forme ondulée, rectiligne, voire plus complexe selon le type de performance que l'on recherche pour le pneumatique.

Par « matériau thermoplastique », on entend un matériau qui est dans un état solide à température ambiante et qui fond lorsqu'on lui apporte une quantité de chaleur suffisante.

### RESUME DE L'INVENTION

L'invention concerne un élément de moule comme défini dans la revendication 1, pour la vulcanisation de tout ou partie d'une bande de roulement d'un pneumatique destinée à recevoir des clous pour des roulages sur glace. L'élément de moule comporte une surface de moulage apte à mouler tout ou partie de la surface de roulement de la bande de roulement. L'élément de moule comporte un insert rapporté dans cet élément de moule. L'insert comprend un corps d'insert destiné à être fixé dans l'élément de moule, une tige destinée à mouler dans la bande de roulement une cavité apte à recevoir un clou, cette tige étant fixée de manière amovible au corps d'insert. L'insert comprend également des moyens de marquage aptes à mouler un motif sur la bande de roulement à proximité du clou. Ces moyens de marquage sont fixés de manière amovible au corps d'insert par des moyens de fixation.

Grâce à l'invention, il est possible de démonter les moyens de marquage en agissant sur les moyens de fixation sans avoir à retirer la totalité de l'insert. De cette manière, on limite les risques d'endommagement du logement recevant l'insert et on assure ainsi une plus grande pérennité du moule. Des formes préferentielles de l'élément de moule selon l'invention sont définies dans les revendications dépendantes 2 à 10.

Dans un mode de réalisation préféré, les moyens de solidarisation comprennent une butée solidaire de la tige.

Dans l'insert, les moyens de marquage sont plaqués contre le corps d'insert par la butée solidaire de la tige. Lorsque l'on vient démonter la tige, on vient dans un même temps libérer les moyens de marquage par rapport au corps d'insert. Ceci facilite les opérations de montage et de démontage de l'ensemble tige-moyens de marquage dans le moule.

Dans une variante de réalisation, l'élément de moule comporte des lamelles destinées à mouler des incisions sur la surface de roulement de la bande de roulement. Les lamelles sont régulièrement réparties en faisant saillie à partir de la surface de moulage de l'élément de moule. Une pluralité de ces lamelles est interrompue au niveau de l'insert. La protubérance appartenant aux moyens de marquage a la forme d'une portion de lamelle, cette portion prolongeant au moins en partie une des lamelles interrompue au niveau de l'insert.

L'invention permet ainsi de maintenir un taux d'entaillement important même à proximité du clou. On améliore alors l'adhérence du pneumatique sur la glace.

Dans une variante de réalisation, la protubérance comporte une extrémité distante de la surface de marquage, cette extrémité formant un élargissement par rapport au reste de la protubérance.

Lors d'un roulage sur un sol glacé, les clous d'un pneumatique clouté grattent la glace et permettent de créer des efforts additionnels. Lors de ce grattage, des copeaux de glace sont générés. Ces copeaux de glace forment une couche de glace entre la surface de roulement du pneumatique et la surface de la glace qui pénalise les performances d'adhérence du pneumatique sur la glace. Il est connu des documents WO 2009/147046 et WO 2009/147047 d'aménager des gorges ou des évidements dans la bande de roulement à proximité des clous afin de stocker ces copeaux de glace. L'invention propose de réaliser d'une manière simple et pratique ces zones de stockage dans la bande de roulement en prévoyant d'élargir les extrémités des protubérances appartenant aux moyens de marquage.

Dans une variante de réalisation, les moyens de marquage comportent une ouverture apte à être traversée par la tige de l'insert, cette ouverture ayant une dimension maximale DO. La position de la protubérance et les dimensions de cette protubérance sont déterminées de sorte que le volume de protubérance présent dans un rayon compris entre D0/2 et D0/2+2 mm autour de l'ouverture, est inférieur ou égal à 20 mm3, et le volume de protubérance présent dans un rayon compris entre D0/2 +2 mm et D0/2+4 mm autour de l'ouverture, est supérieur ou égal à 60 mm3 et inférieur ou égal à 100 mm3.

De cette manière, l'élément de moule permet de mouler des pneumatiques présentant un meilleur compromis entre le niveau d'adhérence sur glace et la tenue des clous en usage. En effet, la protubérance 15 est apte à mouler un certain volume de creux dans la bande de roulement. Ce volume de creux entoure un volume de gomme qui vient lui-même entourer un clou lorsque celui-ci est placé dans la bande de roulement. En positionnant et en dimensionnant les protubérances 15, de sorte à avoir un volume de creux limité entre D0/2 et D0/2+2mm autour du clou, on maintient un ancrage ferme de ce clou dans la bande de roulement. De plus, avec la présence d'un volume de creux important entre D0/2+2 mm et D0/2+4 mm autour du clou, on s'assure qu'une grande quantité de copeaux de glace peut être stockée dans la bande de roulement et ceci à une distance suffisamment faible du clou.

Dans une variante de réalisation, la hauteur maximale Hmax de la ou des protubérance(s) est inférieure ou égale à HA/2, avec HA la hauteur de la tige de lorsque celle-ci est placée dans l'insert.

Dans une variante de réalisation, les moyens de marquage comportent un ensemble de protubérances formant globalement une couronne autour de la tige.

L'espace existant entre les protubérances permet de mouler des ponts de gomme dans la bande de roulement entre le volume de gomme, délimité par la cavité et le volume de creux, et le reste de la bande de roulement. On améliore ainsi l'ancrage du clou dans la bande de roulement.

Dans une variante de réalisation, la surface de marquage comporte une pluralité de trous régulièrement répartis sur cette surface de marquage selon une densité au moins égale à 5 trous par millimètre carré (mm²), la section des trous étant comprise entre 0,003 mm² et 0,06 mm².

Ces trous permettent de mouler une pluralité de brins sur la bande de roulement autour du clou. Ceci permet de donner un aspect plus noir dans une zone autour du clou, par rapport au reste de la bande de roulement, ce qui améliore l'esthétique globale du pneumatique.

Dans une variante de réalisation, la surface de marquage comporte une pluralité de stries s'étendant dans la profondeur des moyens de marquage, ces stries étant régulièrement réparties sur la surface de marquage selon un pas au plus égal à 0,5 mm, les stries ayant une largeur comprise entre 0,03 mm et 0,5 mm.

Ces stries permettent de mouler une pluralité de lames sur la bande de roulement autour du clou. Ceci permet de donner un aspect plus noir dans une zone à proximité du clou, par rapport au reste de la bande de roulement, ce qui améliore l'esthétique globale du pneumatique.

Un autre objet de l'invention concerne un procédé come défini dans la revendication 11, pour la réalisation d'un élément de moule pour la vulcanisation de tout ou partie d'une bande de roulement d'un pneumatique destinée à recevoir des clous pour des roulages sur glace. L'élément de moule comporte une surface de moulage apte à mouler tout ou partie de la surface de roulement de cette bande de roulement. Le procédé comporte une étape de fixation d'un corps d'insert dans l'élément de moule, ledit corps d'insert étant apte à recevoir une tige destinée à mouler dans la bande de roulement une cavité de réception d'un clou. L'insert comprend des moyens de marquage amovibles aptes à mouler un motif sur la surface de roulement de la bande de roulement à proximité du clou, le procédé comporte une étape de fixation de ces moyens de marquage au corps d'insert.

L'élément de moule comporte des lamelles destinées à mouler des incisions sur la surface de roulement de la bande de roulement, ces lamelles étant régulièrement réparties en faisant saillie à partir de la surface de moulage de l'élément de moule, une pluralité de ces lamelles étant interrompue au niveau du corps d'insert. Les moyens de marquage comportent une surface de marquage globalement plane et au moins une protubérance faisant saillie à partir de cette surface de marquage, cette protubérance ayant la forme d'une portion de lamelle. Dans une variante de réalisation, le procédé comporte une étape supplémentaire de positionnement de la protubérance par rapport à l'élément de moule de sorte que cette protubérance prolonge au moins en partie une des lamelles interrompue au niveau du corps d'insert. Des formes préferentielles du procédé selon l'invention sont définies dans les revendications dépendantes 12 et 13.

Dans une variante de réalisation, le procédé comporte préalablement à l'étape de fixation du corps d'insert, une étape de réalisation d'un logement destiné à recevoir le corps d'insert par enlèvement de matière dans une zone de l'élément de moule comprenant des lamelles, la réalisation de ce logement entraînant l'enlèvement de tout ou partie de ces lamelles. Préalablement à l'étape de réalisation de ce logement, on vient déposer un matériau thermoplastique sur la surface de moulage de l'élément de moule entre les lamelles de la zone de l'élément de moule. Ce matériau thermoplastique est apte à durcir en se refroidissant de sorte à rigidifier les lamelles pour faciliter leur enlèvement total ou partiel lors de la réalisation du logement.

Un autre objet de l'invention concerne un moule comme défini dans la revendication 14, comprenant une pluralité d'éléments de moule tels que décrits ci-dessus.

### BREVE DESCRIPTION DES DESSINS

D'autres caractéristiques et avantages de l'invention ressortiront de la description suivante, donnée à titre d'exemple, sans caractère limitatif, en regard des dessins annexés sur lesquels :
- la **figure 1** représente schématiquement une vue en perspective d'un insert destiné à être fixé dans un élément de moule ;
- la **figure 2** représente une vue en coupe de l'insert de la **figure 1** lorsque celui-ci est fixé dans l'élément de moule ;
- la **figure 3** représente une vue en perspective de moyens de marquage de l'insert de la **figure 1****,** selon un second mode de réalisation de l'invention ;
- la **figure 4** représente une vue de dessus des moyens de marquage de la **figure 3****,** lorsque ceux-ci sont placés dans l'élément de moule ;
- la **figure 5** représente une vue en perspective des moyens de marquage de l'insert de la **figure 1****,** selon un troisième mode de réalisation de l'invention ;
- la **figure 6** représente une vue en perspective des moyens de marquage de l'insert de la **figure 1****,** selon un quatrième mode de réalisation de l'invention ;
- la **figure 7** représente une vue de dessus des moyens de marquage de la **figure 6** ;
- la **figure 8** représente une vue en perspective des moyens de marquage de l'insert de la **figure 1****,** selon un cinquième mode de réalisation de l'invention ;
- la **figure 9** représente une vue en perspective des moyens de marquage de l'insert de la **figure 1****,** selon un sixième mode de réalisation de l'invention ;
- la **figure 10** représente une vue en perspective des moyens de marquage de l'insert de la **figure 1****,** selon un septième mode de réalisation de l'invention ;
- la **figure 11** représente une vue en coupe d'un élément de moule sans insert, comprenant une pluralité de lamelles ;
- la **figure 12** représente une première étape de réalisation d'un élément de moule selon l'invention à partir de l'élément de moule de la **figure 11** **;**
- la **figure 13** représente une seconde étape de réalisation de l'élément de moule suite à l'étape de la **figure 12** **;**
- la **figure 14** représente une étape dans laquelle on vient placer l'insert de la **figure 1** dans l'élément de moule ;
- la **figure 15** représente une étape de positionnement de l'insert de la **figure 1** par rapport au reste de l'élément de moule.

Dans la description qui va suivre, des éléments sensiblement identiques ou similaires seront désignés par des références identiques.

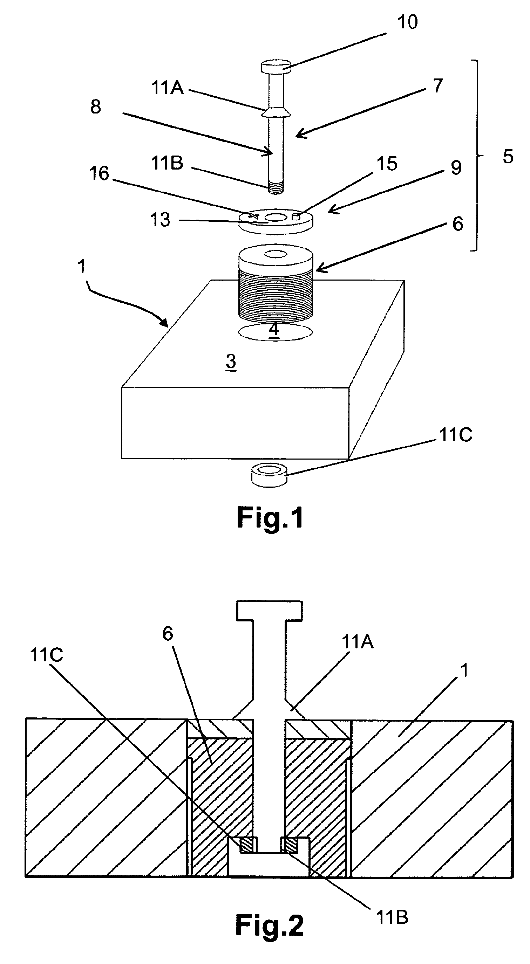

La **figure 1** représente une vue en perspective d'un insert 5 conforme à l'invention, destiné à être fixé dans un élément de moule 1.

L'insert 5 comprend un corps d'insert 6, une tige 7, des moyens de marquage 9, et des moyens de fixation 11 A, 11B, 11C.

Le corps d'insert 6 est destiné à être fixé dans un logement 4 de l'élément de moule. A cet effet, le corps d'insert 6 comprend un filetage s'étendant sur une surface externe de ce corps.

Le corps d'insert 6 est apte à recevoir la tige 7. Cette tige comprend un corps 8, une tête 10 et un filetage 11B. La tige comprend également une butée 11A. Des moyens de marquage 9 sont placés entre la butée 11A et le corps d'insert 6. Ces moyens de marquage comprennent une surface de marquage 13 qui est ici globalement plane, ainsi que des moyens 15 faisant saillie à partir de cette surface de marquage 13 et/ou des moyens 16 en retrait par rapport à cette surface de marquage 13. Les moyens 15 faisant saillie forment des protubérances aptes à mouler un creux dans la bande de roulement. Les moyens 16 sont en creux par rapport à la surface de marquage 13. Ces moyens 16 ont la forme ici de la lettre X et sont aptes à mouler cette lettre en protubérance par rapport à la surface de roulement de la bande de roulement. Ainsi, à partir des moyens faisant saillie 15 et/ou des moyens en creux 16, il est possible de mouler un motif particulier à proximité du clou en vue d'améliorer l'esthétisme du pneumatique, d'améliorer ses fonctionnalités, ou de présenter une information telle que la référence du clou à utiliser pour le pneumatique.

La **figure 2** représente une vue en coupe de l'insert de la **figure 1** lorsque celui-ci est fixé dans l'élément de moule 1.

Dans cette figure, les moyens de marquage 9 sont plaqués contre le corps d'insert 6 et sont maintenus dans cette position par l'action combinée de la butée 11A, du filetage 11B et de l'écrou 11C.

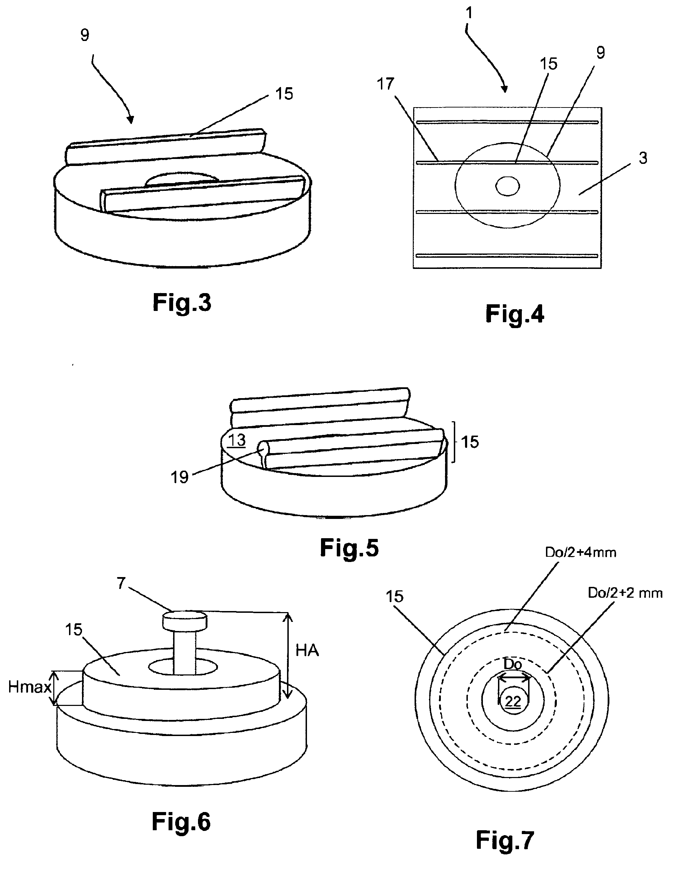

La **figure 3** représente une vue en perspective des moyens de marquage 9 selon un second mode de réalisation. Dans ce second mode de réalisation, les moyens de marquage 9 comprennent deux protubérances 15. Ces protubérances ont la forme de portions de lamelles et sont ainsi aptes à prolonger des lamelles 17 faisant saillie à partir de la surface de moulage 3 de l'élément de moule 1, comme cela est représenté à la **figure 4****.**

La **figure 5** présente une vue en perspective des moyens de marquage 9 selon un troisième mode de réalisation.

Dans ce troisième mode de réalisation, chaque protubérance 15 comporte à une extrémité un élargissement 19. De cette manière, il est possible de mouler des canaux de stockage de copeaux de glace dans la bande de roulement du pneumatique. Ces copeaux de glace sont ensuite évacués hors de la bande de roulement lors du roulage.

La **figure 6** présente une vue en perspective des moyens de marquage 9 selon un quatrième mode de réalisation. Dans ce mode de réalisation, une protubérance 15 entoure entièrement la tige 7 de l'insert. Cette protubérance forme un cylindre creux dont la hauteur Hmax est inférieure ou égale à HA/2, avec HA la hauteur de la tige 7.

La **figure 7** présente une vue de dessus des moyens de marquage de la **figure 6****.** Les moyens de marquage comportent une ouverture 22 apte à être traversée par la tige 7 de l'insert. Cette ouverture a ici une forme circulaire et présente une dimension maximale DO correspondant au diamètre de cette forme. La position de la protubérance sur les moyens de marquage et les dimensions de cette protubérance sont déterminées de sorte que le volume de la protubérance 15 présent dans un rayon compris entre D0/2 et D0/2+2mm autour de l'ouverture 22 est inférieur ou égal à 20 mm3 et le volume de la protubérance 15 présent dans un rayon compris entre D0/2+2 mm et D0/2+4 mm autour de l'ouverture est supérieur ou égal à 60 mm3 et inférieur ou égal à 100 mm3.

De cette manière, l'élément de moule permet de mouler des pneumatiques présentant un meilleur compromis entre le niveau d'adhérence sur glace et la tenue des clous en usage. En effet, la protubérance 15 est apte à mouler un certain volume de creux dans la bande de roulement. Ce volume de creux entoure un volume de gomme qui vient lui-même entourer un clou lorsque celui-ci est placé dans la bande de roulement. En positionnant et en dimensionnant les protubérances 15, de sorte à avoir un volume de creux limité entre D0/2 et D0/2+2mm, on limite le volume de creux autour du clou. Il existe alors un volume de gomme suffisant entre le volume de creux et le clou pour ancrer fermement ce clou dans la bande de roulement. De plus, avec la présence d'un volume de creux important entre D0/2+2 mm et D0/2+4 mm, on s'assure qu'une grande quantité de copeaux de glace peut être stockée dans la bande de roulement et ceci à une distance suffisamment faible du clou.

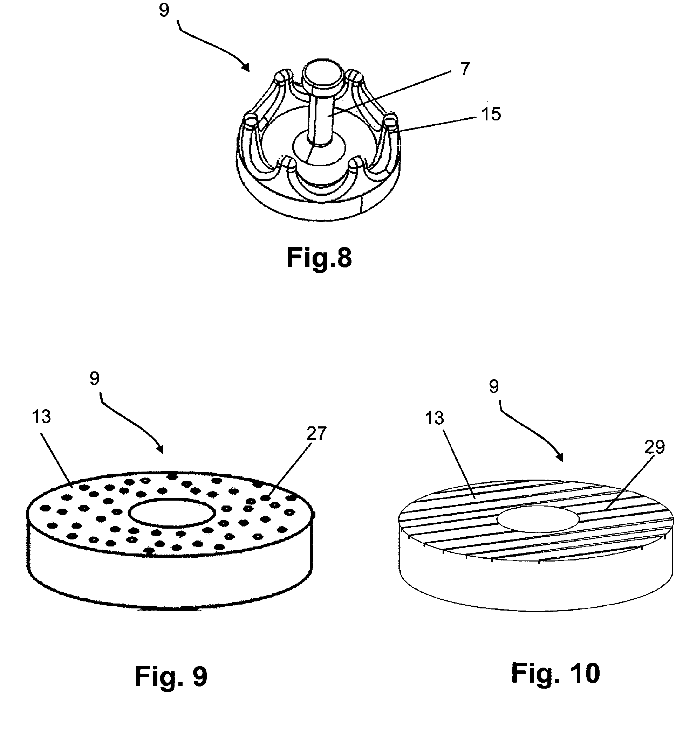

La **figure 8** présente une vue en perspective des moyens de marquage 9 selon un cinquième mode de réalisation. Dans ce mode de réalisation, un ensemble de protubérances 15 forme globalement une couronne autour de la tige 7. De cette manière, il est possible de mouler des ponts de gomme dans la bande de roulement entre le volume de gomme tel que décrit ci-dessus et le reste de la bande de roulement. On améliore ainsi l'ancrage du clou dans la bande de roulement.

La **figure 9** présente une vue en perspective des moyens de marquage 9 selon un sixième mode de réalisation. Dans ce mode de réalisation, la surface de marquage 13 comporte une pluralité de trous 27 régulièrement répartis selon une densité au moins égale à 5 trous par millimètre carré (mm²). La section des trous est comprise entre 0,003 mm² et 0,06 mm². Il est ainsi possible de mouler une texture de type velours donnant un aspect plus noir autour du clou par rapport au reste de la bande de roulement. Afin d'améliorer encore davantage le contraste, il est possible de diminuer la section des trous dans leur profondeur. Les trous peuvent avoir, par exemple, une forme tronconique.

La **figure 10** présente une vue en perspective des moyens de marquage 9 selon un septième mode de réalisation. Dans ce mode de réalisation, la surface de marquage 13 comporte une pluralité de lamelles 29 faisant saillie. Ces lamelles sont régulièrement réparties sur la surface de marquage selon un pas au plus égal à 0,5 mm, ces lamelles ayant une largeur comprise entre 0,03 mm et 0,5 mm. Il est ainsi possible de mouler une texture de type velours donnant un aspect plus noir autour du clou par rapport au reste de la bande de roulement.

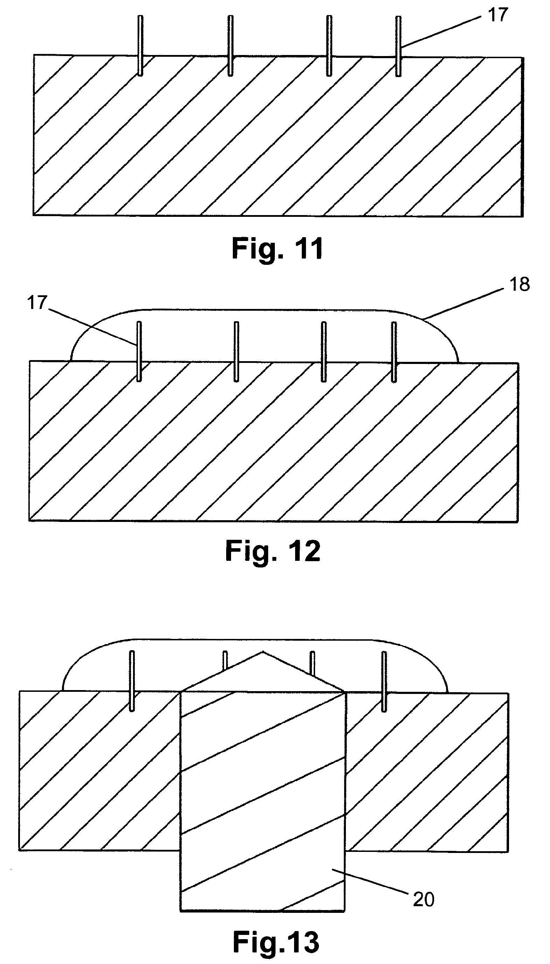

Les **figures 11** à **16** illustrent différentes étapes d'un procédé de réalisation d'un élément de moule selon l'invention.

Plus particulièrement, la **figure 11** représente un élément de moule de base sans insert. Cet élément de base comprend une pluralité de lamelles 17.

La **figure 12** représente une étape du procédé dans laquelle on vient déposer un matériau thermoplastique 18 sur une zone de l'élément de moule entre des lamelles 17. Ce matériau thermoplastique est par exemple un alliage fusible à bas point de fusion à base d'étain et de bismuth, tel que du Cerrocast®. Ce matériau permet de rigidifier tout ou partie des lamelles 17.

La **figure 13** représente une étape du procédé dans laquelle on vient former un logement pour l'insert au cours d'une opération de perçage à l'aide d'un foret 20. Ce foret permet de dégager de la matière de l'élément de moule, du matériau thermoplastique ainsi que des parties des lamelles comprises dans la zone de perçage.

Dans une étape supplémentaire (non représentée), on vient usiner un filetage à l'intérieur du logement formé par le foret, afin de pouvoir y venir fixer le corps d'insert de la **figure 1****.**

Dans une autre étape (non représentée également), on vient retirer le matériau thermoplastique 18 restant sur l'élément de moule en apportant une quantité de chaleur suffisante pour le faire fondre.

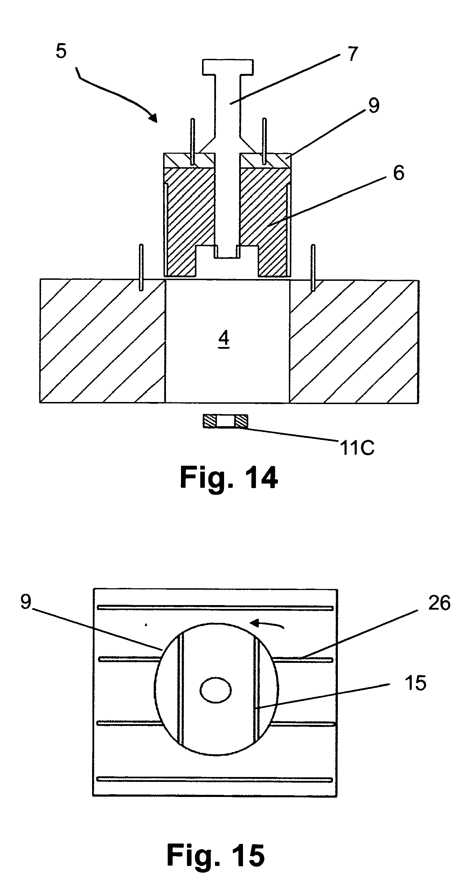

La **figure 14** représente une étape du procédé dans laquelle on vient placer l'insert 5, dans le logement 4.

Dans une étape supplémentaire visible à la **figure 15****,** en faisant tourner les moyens de marquage 9 par rapport au corps d'insert, on vient positionner les protubérances 15 par rapport à des lamelles interrompues 26 de l'élément de moule de sorte que ces protubérances 15 prolongent ces lamelles 26, comme cela est par exemple visible à la **figure 4****.**

Dans une dernière étape (non représentée), on vient fixer les moyens de marquage 9 par rapport au corps d'insert 6 en venant serrer l'écrou 11C sur la tige 7.

On notera qu'en rigidifiant les lamelles, le matériau thermoplastique permet d'améliorer la qualité de coupe des lamelles présentes dans la zone de perçage. De cette manière, on facilite le positionnement des protubérances 15 par rapport aux lamelles interrompues 26.

On notera également que la hauteur et/ou l'épaisseur des protubérances 15 peut (peuvent) être différente(s) de la hauteur et/ou de l'épaisseur des lamelles interrompues 26. Par exemple, il est possible que la hauteur de ces protubérances 15 soit inférieure à la hauteur des lamelles interrompues 26 de manière à maintenir un taux d'entaillement important à proximité du clou tout en évitant de trop assouplir la gomme, ce qui pourrait favoriser le détachement de ce clou hors du pneumatique.

L'invention n'est pas limitée aux exemples décrits et représentés et diverses modifications peuvent y être apportées sans sortir de son cadre.

Ainsi, au lieu de venir visser le corps d'insert dans le logement, il est possible d'emmancher ce corps d'insert.

De plus, on a représenté les moyens de marquage 9 comme une plaque globalement cylindrique prolongeant exactement le corps d'insert 6. En variante, il est possible d'élargir le diamètre de ces moyens de marquage de sorte que ceux-ci s'étendent au-delà des dimensions du corps d'insert.

Enfin, on a représenté à la **figure 3** deux protubérances en parallèles sur les moyens de marquage. Il est tout à fait possible de prévoir une autre disposition de ces protubérances, par exemple, un croisement de ces protubérances.

## Revendications

1. Elément de moule pour la vulcanisation de tout ou partie d'une bande de roulement d'un pneumatique destinée à recevoir des clous pour des roulages sur glace, ledit élément de moule comportant une surface de moulage (3) apte à mouler tout ou partie de la surface de roulement de cette bande de roulement, ledit élément de moule comportant un insert (5) rapporté dans ledit élément de moule, ledit insert comprenant :
- un corps d'insert (6) destiné à être fixé dans l'élément de moule ;
- une tige (7) destinée à mouler dans la bande de roulement une cavité apte à recevoir un clou, cette tige étant fixée de manière amovible au corps d'insert ;
- des moyens de marquage (9) aptes à mouler un motif sur la bande de roulement à proximité du clou ;
**caractérisé en ce que** les moyens de marquage (9) sont fixés de manière amovible au corps d'insert (6) par des moyens de fixation (11A, 11B, 11C).

2. Elément de moule selon la revendication 1, **caractérisé en ce que** les moyens de fixation comprennent une butée (11A) solidaire de la tige (7).

3. Elément de moule selon l'une quelconque des revendications 1 ou 2, **caractérisé en ce que** les moyens de marquage (9) comportent une surface de marquage (13) globalement plane et au moins une protubérance (15) faisant saillie à partir de cette surface de marquage, ladite protubérance étant apte à mouler un creux dans la bande de roulement.

4. Elément de moule selon la revendication 3, ledit élément de moule (1) comportant des lamelles (17) destinées à mouler des incisions sur la surface de roulement de la bande de roulement, lesdites lamelles étant régulièrement réparties en faisant saillie à partir de la surface de moulage (3) de l'élément de moule, une pluralité desdites lamelles étant interrompue au niveau de l'insert, **caractérisé en ce que** la protubérance (15) appartenant aux moyens de marquage (9) a la forme d'une portion de lamelle, ladite portion prolongeant au moins en partie une des lamelles interrompue au niveau de l'insert.

5. Elément de moule selon l'une quelconque des revendications 3 ou 4, **caractérisé en ce que** la protubérance (15) comporte une extrémité distale de la surface de marquage (13), cette extrémité formant un élargissement (19) par rapport au reste de la protubérance.

6. Elément de moule selon l'une quelconque des revendications 3 à 5 dans lequel les moyens de marquage comportent une ouverture (22) apte à être traversée par la tige de l'insert, ladite ouverture ayant une dimension maximale DO, **caractérisé en ce que** la position de la protubérance (15) et les dimensions de cette protubérance sont déterminées de sorte que, le volume de protubérance (15) présent dans un rayon compris entre D0/2 et D0/2+2 mm autour de l'ouverture, est inférieur ou égal à 20 mm3, et **en ce que**, le volume de protubérance (15) présent dans un rayon compris entre D0/2 + 2 mm et D0/2 + 4 mm autour de l'ouverture, est supérieur ou égal à 60 mm3 et inférieur ou égal à 100 mm3.

7. Elément de moule selon la revendication 6, **caractérisé en ce que** la hauteur maximale Hmax de la protubérance (15) est inférieure ou égale à HA/2, avec HA la hauteur de la tige (7) lorsque celle-ci est placée dans l'insert.

8. Elément de moule selon l'une quelconque des revendications 3 à 7, **caractérisé en ce que** les moyens de marquage comportent un ensemble de protubérances (15) formant globalement une couronne autour de la tige (7).

9. Elément de moule selon l'une quelconque des revendications 3 à 8, **caractérisé en ce que** la surface de marquage (13) comporte une pluralité de trous (27) régulièrement répartis sur cette surface de marquage selon une densité au moins égale à 5 trous par millimètre carré (mm²), la section des trous étant comprise entre 0,003 mm² et 0,06 mm².

10. Elément de moule selon l'une quelconque des revendications 3 à 9, **caractérisé en ce que** la surface de marquage (13) comporte une pluralité de stries (29) s'étendant dans la profondeur des moyens de marquage (9), ces stries étant régulièrement réparties sur la surface de marquage selon un pas au plus égal à 0,5 mm, les stries ayant une largeur comprise entre 0,03 mm et 0,5 mm.

11. Procédé de réalisation d'un élément de moule pour la vulcanisation de tout ou partie d'une bande de roulement d'un pneumatique destinée à recevoir des clous pour des roulages sur glace, ledit élément de moule comportant une surface de moulage apte à mouler tout ou partie de la surface de roulement de cette bande de roulement, ledit procédé comportant les étapes suivantes :
- on vient fixer un corps d'insert dans l'élément de moule, ledit corps d'insert étant apte à recevoir une tige destinée à mouler dans la bande de roulement une cavité de réception d'un clou ;
**caractérisé en ce que** le procédé comporte une étape de fixation de moyens de marquage avec le corps d'insert, ces moyens de marquage étant aptes à mouler un motif sur la surface de roulement de la bande de roulement à proximité du clou.

12. Procédé de réalisation selon la revendication 11, ledit élément de moule comportant des lamelles destinées à mouler des incisions sur la surface de roulement de la bande de roulement, lesdites lamelles étant régulièrement réparties en faisant saillie à partir de la surface de moulage de l'élément de moule, une pluralité desdites lamelles étant interrompue au niveau du corps d'insert, **caractérisé en ce que**, les moyens de marquage comportent une surface de marquage globalement plane et au moins une protubérance faisant saillie à partir de cette surface de marquage, ladite protubérance ayant la forme d'une portion de lamelle, le procédé de réalisation comportant une étape de positionnement de cette protubérance par rapport à l'élément de moule de sorte que cette protubérance prolonge au moins en partie une des lamelles interrompue au niveau du corps d'insert.

13. Procédé de réalisation selon l'une quelconque des revendications 11 à 12, ledit procédé comportant préalablement à l'étape de fixation du corps d'insert, une étape de réalisation d'un logement destiné à recevoir le corps d'insert par enlèvement de matière dans une zone de l'élément de moule comprenant des lamelles, la réalisation de ce logement entraînant l'enlèvement de tout ou partie de ces lamelles, **caractérisé en ce que** préalablement à l'étape de réalisation de ce logement, on vient déposer un matériau thermoplastique sur la surface de moulage de l'élément de moule entre les lamelles de la zone de l'élément de moule, ledit matériau thermoplastique étant apte à durcir en se refroidissant de sorte à rigidifier lesdites lamelles pour faciliter leur enlèvement total ou partiel lors de la réalisation du logement.

14. Moule comprenant une pluralité d'éléments de moule selon l'une quelconque des revendications 1 à 10.

## Patentansprüche

1. Formelement für die Vulkanisation einer ganzen Reifenlauffläche oder eines Teils einer Reifenlauffläche, welche dafür vorgesehen ist, Nägel für Einsätze auf Eis aufzunehmen, wobei das Formelement eine Formfläche (3) umfasst, welche geeignet ist, die ganze Lauf-Oberfläche oder einen Teil der Lauf-Oberfläche dieser Reifenlauffläche abzuformen, wobei das Formelement einen in das Formelement eingebrachten Einsatz (5) aufweist, welcher Einsatz Folgendes aufweist:
- einen Einsatz-Körper (6), welcher dafür vorgesehen ist, in dem Formelement befestigt zu werden;
- eine Stange (7), welche dafür vorgesehen ist, in der Reifenlauffläche einen Hohlraum abzuformen, welcher geeignet ist, einen Nagel aufzunehmen, wobei diese Stange auf abnehmbare Weise am Einsatz-Körper befestigt ist;
- Markierungsmittel (9), welche geeignet sind, ein Motiv auf der Reifenlauffläche in der Nähe des Nagels abzuformen;
**dadurch gekennzeichnet, dass** die Markierungsmittel (9) auf abnehmbare Weise durch Befestigungsmittel (11A, 11B, 11C) am Einsatz-Körper (6) befestigt sind.

2. Formelement nach Anspruch 1, **dadurch gekennzeichnet, dass** die Befestigungsmittel einen fest mit der Stange (7) verbundenen Anschlag (11A) aufweisen.

3. Formelement nach einem der Ansprüche 1 oder 2, **dadurch gekennzeichnet, dass** die Markierungsmittel (9) eine im Allgemeinen ebene Markierungsfläche (13) und mindestens eine von dieser Markierungsfläche vorspringende Ausstülpung (15) umfassen, wobei die Ausstülpung geeignet ist, einen Hohlraum in der Reifenlauffläche abzuformen.

4. Formelement nach Anspruch 3, wobei das Formelement (1) Lamellen (17) umfasst, welche dafür vorgesehen sind, Einschnitte in der Lauf-Oberfläche der Reifenlauffläche abzuformen, wobei die Lamellen gleichmäßig verteilt sind und von der Formfläche (3) des Formelements vorspringen, wobei eine Vielzahl der Lamellen im Bereich des Einsatzes unterbrochen sind, **dadurch gekennzeichnet, dass** die den Markierungsmitteln (9) zugehörige Ausstülpung (15) die Form eines Lamellenabschnitts besitzt, wobei der Abschnitt zumindest zum Teil eine der im Bereich des Einsatzes unterbrochenen Lamellen verlängert.

5. Formelement nach einem der Ansprüche 3 oder 4, **dadurch gekennzeichnet, dass** die Ausstülpung (15) ein distales Ende der Markierungsfläche (13) umfasst, wobei dieses Ende eine Aufweitung (19) in Bezug auf den Rest der Ausstülpung bildet.

6. Formelement nach einem der Ansprüche 3 bis 5, bei welchem die Markierungsmittel eine Öffnung (22) umfassen, welche geeignet ist, von der Stange des Einsatzes durchdrungen zu werden, wobei die Öffnung eine maximale Abmessung DO aufweist, **dadurch gekennzeichnet, dass** die Position der Ausstülpung (15) und die Abmessungen dieser Ausstülpung derartig festgelegt sind, dass das Volumen der Ausstülpung (15), welches in einem zwischen D0/2 und D0/2+2 mm liegenden Radius vorhanden ist, kleiner oder gleich 20 mm3 ist, und dass das Volumen der Ausstülpung (15), welches in einem zwischen D0/2+2 mm und D0/2+ 4 mm um die Öffnung herum liegenden Radius vorhanden ist, größer oder gleich 60 mm3 und kleiner oder gleich 100 mm3 ist.

7. Formelement nach Anspruch 6, **dadurch gekennzeichnet, dass** die maximale Höhe Hmax der Ausstülpung (15) kleiner oder gleich HA/2 ist, wobei HA die Höhe der Stange (7) ist, wenn diese in dem Einsatz angeordnet ist.

8. Formelement nach einem der Ansprüche 3 bis 7, **dadurch gekennzeichnet, dass** die Markierungsmittel eine Menge von Ausstülpungen (15) umfassen, welche im Allgemeinen einen Kranz um die Stange (7) herum bildet.

9. Formelement nach einem der Ansprüche 3 bis 8, **dadurch gekennzeichnet, dass** die Markierungsfläche (13) eine Vielzahl an Löchern (27) umfasst, welche gleichmäßig über diese Markierungsfläche gemäß einer Dichte von mindestens gleich 5 Löcher pro Quadratmillimeter (mm²) verteilt sind, wobei der Querschnitt der Löcher zwischen 0,003 mm² und 0,06 mm² liegt.

10. Formelement nach einem der Ansprüche 3 bis 9, **dadurch gekennzeichnet, dass** die Markierungsfläche (13) eine Vielzahl von Riefen (29) umfasst, welche sich in der Tiefe der Markierungsmittel (9) erstrecken, wobei diese Riefen gleichmäßig über die Markierungsfläche gemäß einer Teilung von höchstens gleich 0,5 mm verteilt sind, wobei die Riefen eine Breite besitzen, die zwischen 0,03 mm und 0,5 mm liegt.

11. Verfahren zur Herstellung eines Formelements für die Vulkanisation einer ganzen Reifenlauffläche oder eines Teils einer Reifenlauffläche, welche dafür vorgesehen ist, Nägel für Einsätze auf Eis aufzunehmen, wobei das Formelement eine Formfläche umfasst, welche geeignet ist, die ganze Lauf-Oberfläche oder einen Teil der Lauf-Oberfläche dieser Reifenlauffläche abzuformen, wobei das Verfahren die folgenden Schritte umfasst:
- Befestigen eines Einsatz-Körpers in dem Formelement, wobei der Einsatz-Körper geeignet ist, eine Stange aufzunehmen, welche dafür vorgesehen ist, in der Reifenlauffläche einen Hohlraum zur Aufnahme eines Nagels abzuformen;
**dadurch gekennzeichnet, dass** das Verfahren einen Schritt des Befestigens von Markierungsmitteln mit dem Einsatz-Körper umfasst, wobei diese Markierungsmittel geeignet sind, ein Motiv auf der Lauf-Oberfläche der Reifenlauffläche in der Nähe des Nagels abzuformen.

12. Herstellungsverfahren nach Anspruch 11, wobei das Formelement Lamellen umfasst, welche dafür vorgesehen sind, Einschnitte in der Lauf-Oberfläche der Reifenlauffläche abzuformen, wobei die Lamellen gleichmäßig verteilt sind und von der Formfläche des Formelements vorspringen, wobei eine Vielzahl der Lamellen im Bereich des Einsatz-Körpers unterbrochen sind, **dadurch gekennzeichnet, dass** die Markierungsmittel eine im Allgemeinen ebene Markierungsfläche und mindestens eine von dieser Markierungsfläche vorspringende Ausstülpung umfassen, wobei die Ausstülpung die Form eines Lamellenabschnitts besitzt, wobei das Herstellungsverfahren einen Schritt zum derartigen Positionieren dieser Ausstülpung in Bezug auf das Formelement umfasst, dass diese Ausstülpung eine der im Bereich des Einsatz-Körpers unterbrochenen Lamellen zumindest zum Teil verlängert.

13. Herstellungsverfahren nach einem der Ansprüche 11 bis 12, wobei das Verfahren vor dem Schritt des Befestigens des Einsatz-Körpers einen Schritt zum Herstellen einer Ausnehmung durch Entfernen von Material in einem Lamellen aufweisenden Bereich des Formelements umfasst, welche dafür vorgesehen ist, den Einsatz-Körper aufzunehmen, wobei die Herstellung dieser Ausnehmung das Entfernen aller oder eines Teils dieser Lamellen mit sich führt, **dadurch gekennzeichnet, dass** vor dem Schritt des Herstellens dieser Ausnehmung ein thermoplastisches Material auf der Formfläche des Formelements zwischen die Lamellen des Bereichs des Formelements eingebracht wird, wobei das thermoplastische Material geeignet ist durch Abkühlung derartig auszuhärten, dass die Lamellen versteift werden, um deren gesamtes oder teilweises Entfernen bei der Herstellung der Ausnehmung zu erleichtern.

14. Gießform, umfassend eine Vielzahl von Formelementen nach einem der Ansprüche 1 bis 10.

## Claims

1. Mould element for vulcanizing all or part of a tyre tread intended to accept studs for driving on ice, the said mould element comprising a moulding surface (3) able to mould all or part of the tread surface of this tread, the said mould element comprising an insert (5) added into the said mould element, the said insert comprising :
- an insert body (6) intended to be fixed into the mould element ;
- a rod (7) intended for moulding into the tread a cavity that is capable of accepting a stud, this rod being fixed removably to the insert body ;
- marking means (9) able to mould a pattern on the tread near the stud;
**characterized in that** the marking means (9) are fixed removably to the insert body (6) by fixing means (11A, 11B, 11C).

2. Mould element according to Claim 1, **characterized in that** the fixing means comprise a limit stop (11A) secured to the rod (7).

3. Mould element according to either one of Claims 1 and 2, **characterized in that** the marking means (9) comprise a marking surface (13) that is planar overall and at least one protrusion (15) projecting from this marking surface, the said protrusion being able to mould a recess in the tread.

4. Mould element according to Claim 3, the said mould element (1) comprising sipe blades (17) intended to mould sipes in the tread surface of the tread, the said sipe blades being evenly distributed and projecting from the moulding surface (3) of the mould element, a plurality of the said sipe blades being interrupted in the region of the insert, **characterized in that** the protrusion (15) belonging to the marking means (9) has the shape of a portion of a sipe blade, the said portion at least partially extending one of the sipe blades that is interrupted in the region of the insert.

5. Mould element according to either one of Claims 3 and 4, **characterized in that** the protrusion (15) comprises a distal end of the marking surface (13), this end forming a widening (19) relative to the rest of the protrusion.

6. Mould element according to any one of Claims 3 to 5, in which the marking means comprise an opening (22) through which the rod of the insert can pass, the said opening having a maximum dimension DO, **characterized in that** the position of the protrusion (15) and the dimensions of this protrusion are determined so that the volume of protrusion (15) present in a radius comprised between DO/2 and DO/2+2 mm around the opening, is less than or equal to 20 mm3, and **in that** the volume of protrusion (15) present in a radius comprised between DO/2 + 2 mm and DO/2 + 4 mm around the opening, is greater than or equal to 60 mm³ and less than or equal to 100 mm³.

7. Mould element according to Claim 6, **characterized in that** the maximum height Hmax of the protrusion (15) is less than or equal to HA/2, where HA is the height of the rod (7) when this rod is placed in the insert.

8. Mould element according to any one of Claims 3 to 7, **characterized in that** the marking means comprise a set of protrusions (15) which globally form a ring around the rod (7).

9. Mould element according to any one of Claims 3 to 8, **characterized in that** the marking surface (13) comprises a plurality of holes (27) uniformly distributed over this marking surface at a density at least equal to 5 holes per square millimetre (mm²), the cross section of the holes being comprised between 0.003 mm² and 0.06 mm².

10. Mould element according to any one of Claims 3 to 9, **characterized in that** the marking surface (13) comprises a plurality of striations (29) extending into the depth of the marking means (9), these striations being evenly distributed on the marking surface at a spacing at most equal to 0.5 mm, the striations having a width comprised between 0.03 mm and 0.5 mm.

11. Method for producing a mould element for vulcanizing all or part of a tyre tread intended to accept studs for driving on ice, the said mould element comprising a moulding surface able to mould all or part of the tread surface of this tread, the said method comprising the following steps:
- an insert body is fixed into the mould element, the said insert body being able to accept a rod intended to mould in the tread a cavity for accommodating a stud; **characterized in that** the method comprises a step of fixing marking means with the insert body, these marking means being able to mould a pattern on the tread surface of the tread near the stud.

12. Production method according to Claim 11, the said mould element comprising sipe blades intended to mould sipes in the tread surface of the tread, the said sipe blades being evenly distributed and projecting from the moulding surface of the mould element, a plurality of the said sipe blades being interrupted in the region of the insert body, **characterized in that** the marking means comprise a marking surface that is planar overall and at least one protrusion projecting from this marking surface, the said protrusion having the shape of a sipe blade portion, the production method comprising a step of positioning this protrusion relative to the mould element in such a way that this protrusion at least partially extends one of the sipe blades that is interrupted in the region of the insert body.

13. Production method according to either one of Claims 11 and 12, the said method comprising, prior to the step of fixing the insert body, a step of producing a housing intended to accept the insert body by removing material in a zone of the mould element comprising sipe blades, the production of this housing involving the removal of all or part of these sipe blades, **characterized in that** prior to the step of producing this housing, a thermoplastic material is applied to the moulding surface of the mould element between the sipe blades of the zone of the mould element, the said thermoplastic material being able to harden as it cools so as to make the said sipe blades more rigid in order to make them easier to remove in full or in part when producing the housing.

14. Mould comprising a plurality of mould elements according to any one of Claims 1 to 10.
